(19) Europäisches Patentamt

European Patent Office

Office européen des brevets

(11) Numéro de publication: **0 185 829 B1**

## (12) FASCICULE DE BREVET EUROPEEN

(45) Date de publication de fascicule du brevet: **01.07.92**  (51) Int. Cl.⁵: **G05B 19/417**

(21) Numéro de dépôt: **84402730.0**

(22) Date de dépôt: **27.12.84**

(54) **Installation automatisée de traitement d'objets de grandes dimensions.**

(43) Date de publication de la demande:
**02.07.86 Bulletin 86/27**

(45) Mention de la délivrance du brevet:
**01.07.92 Bulletin 92/27**

(84) Etats contractants désignés:
**BE DE FR GB IT NL SE**

(56) Documents cités:
**EP-A- 0 044 565**
**US-A- 4 309 600**

**KOBAYASHI K.: DNC system with robot, proceedings of the 4th International symposium on industrial robots, 19-21 november 1974, Sobim Jira, Tokio, JP**

**HOWARD, Planning development for computer--aided design and maufacturing" Proceeding of the numerial control society, 16 annual meeting, March 1979, Spring lake, N.C.S., US**

**GITTO."DDP/DNC system, proceeding of the numerial control society, 16 annual meeting, march 1979, Spring Lake, N.C.S., US**

(73) Titulaire: **INSTITUT DE RECHERCHES DE LA CONSTRUCTION NAVALE**
**47 rue de Monceau**
**F-75008 Paris(FR)**

(72) Inventeur: **Sicard, Claude**
**36 rue Cuvier**
**F-44600 Saint Nazaire(FR)**
Inventeur: **Kroczynski, Patrice**
**Saturne II 120 rue Camille Groult**
**F-94400 Vitry(FR)**
Inventeur: **Mars, Denis**
**1 Square René Bazin**
**F-78150 Le Chesnay(FR)**
Inventeur: **Gallard, Hervé**
**L'Olivaie Belgentier**
**F-83210 Sollies-Pont(FR)**
Inventeur: **Devos, Michel**
**Résidence Grand Pavois 187 Digue de Mer**
**F-59240 Dunkerque(FR)**

(74) Mandataire: **Corre, André**
**Cabinet Corre A. 17, rue Pasteur**
**F-92300 Levallois(FR)**

EP 0 185 829 B1

## Description

La présente invention est relative à une installation automatisée de traitement d'objets de grande dimension . De nombreux types d'ateliers automatisés ont été réalisés ou proposés dans les dernières années pour des traitements divers d'objets variés, toutefois la construction navale est restée un peu à l'écart du mouvement. La raison en est qu'elle pose des problèmes particuliers qu'on rencontre rarement, ou jamais réunis ensemble dans d'autres secteurs de l'industrie.

Le document EP-A-0 044 565 est relatif à une installation perfectioneée comprenant des machines numériques pilotées par ordinateur, et un centre de programmation contrôle l'ensemble. Les produits sont envoyés de machine en machine par des dispositifs automatiques. Mais un tel dispositif de l'art antérieur n'est pas adapté à la taille des produits fabriqués dans la construction navale, premier des problèmes à résoudre.

Les dimensions d'une coque, ou d'un tronçon de coque sont telles qu'il est impensable de l'amener à proximité de robots de traitements successifs, et que ce sont au contraire les robots qu'il faut déplacer pour les amener en position de travail. Un autre problème résulte du caractère généralement non parfaitement répétitif des tâches. Si on considère un tronçon de coque de navire, il est constitué d'un certain nombre de cellules limitées par des cloisons longitudinales ou transversales, chaque cellule ressemble à ses voisines mais elle est en général différente. A une échelle plus grande, il est rare que deux ou plusieurs navires soient rigoureusement identiques. De ce fait, un mode d'organisation qui n'automatiserait que des tâches exactement répétitives s'exposerait à laisser de côté une partie du travail dont l'importance serait redhibitoire.

Le but de l'invention est de fournir une installation automatisée qui soit capable de traiter, sans les déplacer, des objets que leur forme, ou le traitement qu'ils doivent subir rendent, en général, non rigoureusement identique, tout en laissant entre eux des ressemblances.

Un autre but de l'invention est de fournir une telle installation comprenant un atelier où les outils peuvent être déplacés sur de grandes distances, en opération ou non, avec cependant une précision et une vitesse de travail comparables à celles qu'on obtient avec une installation où les outils ne sont déplacés que sur de faibles distances.

Un troisième but de l'invention est de faire fonctionner en simultané et de façon automatique plusieurs moyens d'outillage.

Pour atteindre ces buts, l'invention fournit une installation pour la construction ou le traitement automatique d'objets analogues, mais généralement non identiques, ces objets pouvant former des groupes assemblés; cette installation comprend :

a) un poste de travail pourvu d'au moins un outil de travail pour réaliser un travail sur un objet,

b) un centre de programmation recevant et mettant en mémoire des informations nécessaires relatives aux objets sur lesquels un travail doit être effectué, et des caractéristiques techniques sur les possibilités des outils nécessaires pour réaliser le travail, ledit centre de programmation étant relié audit poste de travail, et comprenant :

    (i) une base de données "géométriques" recevant et mettant en oeuvre des données concernant les objets sur lesquels un travail doit être effectué,

    (ii) une base de données "outillage" contenant les données techniques quant aux outils de travail,

    (iii) une base de données "paramètres de travail" contenant les standards de travail,

c) un poste de supervision relié audit centre,

d) une base de données reliée audit poste de supervision et la ladite base de données recevant et stockant des données relatives à une séquence de travail, afin de recevoir et transmettre lesdites données sur ladite séquence de travail audit poste de supervision,

e) une base de données de gestion statistique reliée, d'une part, à ladite base de données recevant et stockant des données relatives à la séquence de travail et, d'autre part, au poste de préparation du travail;

cette installation est caractérisée par le fait qu'elle comprend aussi :

f) des moyens pour déplacer ledit poste de travail d'un lieu à un autre qui supportent ledit poste de travail

g) des moyens pour détecter l'environnement dudit poste de travail en relation avec celui-ci afin de déterminer la position dudit poste de travail lesdits moyens pour déplacer et lesdits moyens pour détecter étant reliés audit centre de supervision afin de recevoir l'information programmée à partir dudit centre de programmation, de détecter la présence d'au-moins un outil et communiquer des instructions auxdits moyens pour déplacer sur la base de ladite information programmée,

h) un poste de préparation de travail relié audit centre de programmation afin de préparer une séquence de travail correspondant aux données concernant les objets sur lesquels un travail doit être effectué, ledit poste comprenant :

    (i) des moyens pour exécuter une simulation visuelle pour décrire lesdits objets,

    (ii) une base de données recevant et stockant des données relatives à ladite séquence de travail.

Comme on peut le comprendre d'après ce qui a été dit plus haut, l'installation est particulièrement avantageuse dans le cas où elle fait partie d'un chantier de construction navale, les objets étant des cellules, et les groupes d'objets étant des blocs constituant chacun une partie d'un navire en construction.

De préférence le centre de programmation comprend

- une base de données "géométriques" qui reçoit, à travers une interface, les données relatives aux objets à fabriquer ou traiter,
- une base de données "outillage" qui contient la description des possibilités des outillages,
- une base de données "paramètres de travail" qui contient les standards de travail,
- un poste de préparation de travail qui peut extraire les données dont il a besoin des trois banques de données précitées, pour préparer une séquence de travail correspondant à un objet, qui est équipé de moyen d'exécuter une simulation visuelle pour le contrôle d'une telle séquence de travail, et qui peut également préparer une séquence de travail pour un groupe d'objets,
- une base de données "séquence de travail" capable de recevoir une séquence de travail depuis le poste de préparation de travail et de la lui restituer à sa demande,
- une base de données de gestion statistique capable également d'échange dans les deux sens avec le poste de préparation de travail,
- une banque de donnée de séquence de travail d'un groupe, capable de recevoir une telle séquence de travail préparé par le poste de travail et de la transmettre au poste de supervision.

De préférence aussi, le poste de supervision comporte un microprocesseur esclave relié à un microprocesseur maître qui fait partie du centre de programmation.

Suivant une particularité avantageuse, l'atelier est désservi par une poutre porteuse mobile telle que portique, pont roulant ou analogue, et est équipé d'au moins un robot formé d'un bras articulé comportant plusieurs axes de rotation et/ou liaisons coulissantes pourvues chacune de moyens moteurs, une extrémité du dit bras pouvant être reliée à un outil de traitement ou d'inspection d'une pièce, l'autre extrémité du dit bras étant reliée à un porteur de robot pourvu de moyens d'accrochage déconnectable susceptibles d'assurer une liaison mécanique directe avec l'objet à traiter ou à inspecter, et de moyens pour assurer une liaison mécanique du dit porteur avec la dite poutre porteuse afin de permettre de déplacer le dit porteur avec le bras d'un point à l'autre de l'atelier, l'atelier comportant en outre des moyens de commande et d'alimentation des dits moyens moteurs et du dit outil, et des moyens de liaison entre les dits moyens de commande et d'alimentation et les dits moyens moteurs.

Les moyens pour assurer la liaison du porteur avec la dite poutre sont des moyens d'accrochage déconnectables, distincts des moyens assurant une liaison mécanique directe avec l'objet à traiter.

Par "poutre porteuse, pont roulant, portique, ou analogue" on désigne un mobile qui permet de prendre un objet dans l'atelier, de le transférer à vitesse élevée à un autre point de l'atelier et le laisser à cet autre point. Parmi les mobiles qui répondent à cette définition, les ponts roulants sont les plus répandus, mais on trouve aussi notamment : les portiques, les poutres, les potences, et divers engins de transport. Une variante consiste à réaliser un portique comprenant un ratelier porte-outil ainsi qu'une passerelle de commande et de préparation des couples robots porteurs.

Dans ce cas, le palan du pont roulant sera avantageusement remplacé par des profils métalliques rigides polyarticulés et/ou coulissants. Ainsi donc dans le présent texte, pour simplifier, on désigne n'importe quel de ces engins par "poutre porteuse".

Le dispositif de l'invention offre les mêmes avantages de vitesse et de précision pendant les moments où l'outil est en action, qu'un ensemble robotique ayant les mêmes caractéristiques que l'ensemble constitué par le bras du robot et son porteur, cependant qu'il possède les propriétés d'amplitude et de vitesse des déplacements procurés par la poutre porteuse pendant les périodes de transport.

La liaison mécanique directe du porteur, par exemple à la poutre porteuse, peut se faire en utilisant simplement le crochet suspendu classiquement au chariot mobile de la poutre porteuse si celle-ci en est pourvue mais cette solution entraîne la difficulté suivante : il est possible actuellement d'assurer la position du crochet dans le sens de la longueur et de la largeur de l'atelier, ainsi que dans le sens de la hauteur avec une bonne précision, de l'ordre de 0,1 m depuis la cabine de commande, mais l'orientation du crochet dans la plupart des cas échappe au contrôle de la cabine de commande. Le crochet est relié à la poutre du pont par un câble à un ou deux brins, avec interposition le plus souvent d'une articulation à axe vertical, si bien qu'une intervention humaine est nécessaire si l'on veut orienter la charge portée par le crochet d'une façon précise, ce qui est le cas ici. Même si on supprime cette articulation verticale le crochet est soumis à des mouvements d'oscillation autour d'un axe vertical dus au faible couple de rappel du câble. Ces mouvements sont difficilement contrôlables depuis la cabine de commande de la poutre porteuse, si bien qu'il est difficile de déposer le porteur dans une orientation prévue à l'avance.

Selon une modalité intéressante de la présente invention, on prévoit que, les moyens désignés sous le nom de "préhenseurs" prévus sur la poutre porteuse pour coopérer avec les moyens d'accrochage correspondants prévus sur le support sont reliés au reste de la poutre porteuse par des câbles croisés ou par un câble vertical qui supporte la charge, mais dans ce cas, le préhenseur est pourvu d'un stabilisateur comportant un volant gyroscopique à axe horizontal et des moyens pour faire tourner le dit préhenseur autour d'un axe vertical par rapport au dit stabilisateur afin d'amener le préhenseur dans l'orientation voulue. Le préhenseur peut, en ce qui concerne l'accrochage du porteur, être "passif" et constitué par exemple par un crochet, et dans ce cas, les moyens d'accrochage portés par le porteur sont "actifs", formés par exemple de pinces dont les mâchoires s'écartent pour la déconnexion. On préfère cependant que la cabine de commande de la poutre porteuse puisse agir à la fois sur les moyens pour faire tourner le préhenseur et sur le préhenseur luimême, celui-ci étant du type "actif" au sens indiqué ci-dessus.

Un autre point important pour la bonne marche de l'atlier concerne les moyens de liaison reliant les moyens d'alimentation et de commande au bras de robot. On conçoit que ces moyens de liaison risquent de gêner les mouvements de la poutre porteuse s'ils sont en permanence connectés aux moyens d'alimentation et de commande et au bras de robot. D'autre part une manipulation manuelle des moyens de liaison, pour les débrancher et rebrancher à chaque déplacement opéré par la poutre porteuse, représente un travail pénible et qui peut être dangereux. Pour cette raison le préhenseur est composé de deux éléments déconnectables, l'un de ces deux éléments comprend un ou des enrouleurs destinés à recevoir les moyens d'alimentation et/ou de commande du bras du robot, ces moyens de liaison étant euxmêmes déconnectables au moins en un point.

Une autre difficulté apparaît au niveau de la nature des moyens de laison eux-mêmes, spécialement lorsque l'outil est une torche de soudage électrique agissant sous des intensités de plusieurs centaines d'ampères, comme cela est fréquent aujourd'hui en soudage automatique. Les parasites causés par ces courants soumis à des variations brusques sont de nature à perturber gravement les signaux de commande ou d'information. Ces phénomènes sont toujours redoutés des constructeurs de robot. Dans la présente invention, il est prévu qu'un couple robot porteur soit en travail pendant qu'un autre couple, à proximité, soit en cours de mise en oeuvre, en particulier en cours d'initialisation et reconnaissance de joints qui sont des tâches impliquant un flot d'informations important. Dans un environnement industriel il sera pratiquement impossible de garantir que le rayonnement d'amorçage d'arc de l'un ne se transmette à l'autre. On préfère prévoir, dans ce cas, que les moyens de liaison comprennent, outre le câble ou les câbles transmettant le courant de soudage, un ensemble de fibres optiques qui constituent un bus, des codeursdécodeurs étant prévus aux extrémités des moyens de liaison pour transformer les signaux optiques en signaux électroniques et vice-versa.

Cette modalité permet d'arriver à une nouvelle simplification de la structure de l'atelier. Selon cette modalité on prévoit en effet que l'ensemble des moyens informatiques de commande et de mémoire du programme est regroupé dans un processeur unique situé au niveau des moyens d'alimentation et/ou de commande, le couple formé par le robot et son porteur ne comportant essentiellement que les dits codeurs-décodeurs, et les moyens électriques ou mécaniques nécessaires et leurs commandes directes reliées aux dits codeurs-décodeurs. On dispose ainsi d'un ordinateur de commande central qui peut être placé dans une zone d'accès facile et où son entretien est aisé, de préférence au poste de supervision ou à proximité immédiate de celui-ci. Le porteur et le bras de robot sont simplifiés et allégés puisqu'ils ne comportent qu'un minimum d'électronique, ce qui facilite les déplacement et l'entretien, les risques d'avoir à faire une intervention humaine à l'intérieur de l'atelier étant réduits au minimum. D'autre part, les boucles d'asservissement seront traitées au niveau du processeur unique ce qui permet à deux robots de travailler ensemble sur une même tâche sans avoir à retransférer les informations de synchronisation des trajectoires.

L'invention va maintenant être décrite plus en détail à l'aide d un exemple pratique, non limitatif de réalisation selon l'invention, relatif à un chantier naval équipé de robots pour la soudure des éléments de blocs préfabriqués d'un navire. Cet exemple est illustré par les dessins, parmi lesquels :

- Fig. 1 est une vue schématique d'ensemble en perspective de l'atelier,
- Fig. 2 est une vue en perspective d'un couple robot porteur,
- Fig. 3 est une vue en perspective d'un autre couple robot porteur,
- Fig. 4 à 8 sont des schémas de la mise en oeuvre de l'invention,
- Fig. 9 est un schéma de détail d'un préhenseur et d'organes qui coopèrent avec lui,
- Fig. 10 est un schéma du même préhenseur avec d'autres organes qui coopèrent avec lui,

- Fig. 11 est un diagramme fonctionnel des différents organes de l'atelier et du poste de supervision,
- Fig. 12 est un schéma fonctionnel du centre de programmation.

Pour des raisons de clarté on décrira l'installation dans un ordre inverse de celui qui a été adopté plus haut, c'est-à-dire en commençant par l'atelier pour finir au centre de programmation.

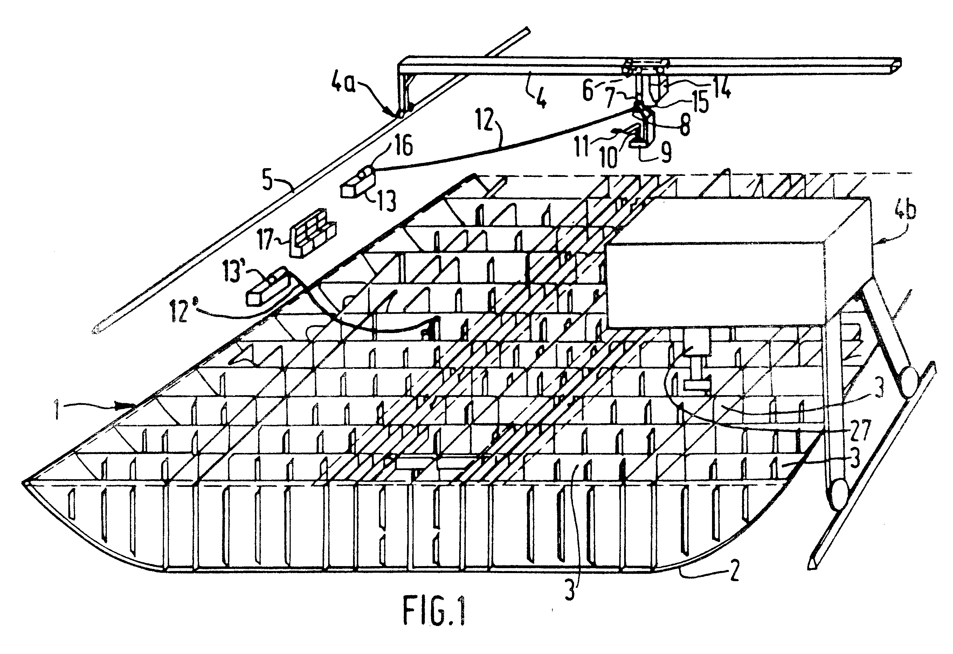

La Fig. 1 montre schématiquement un atelier robotisé avec un navire en cours de construction. Un fragment 1 du navire seulement est représenté avec un bloc préfabriqué de coque 2. Un certain nombre de cloisons raidisseuses longitudinales et transversales divisent l'espace en un certain nombre de compartiments 3 de formes et dimensions variables. Une poutre porteuse 4 de pont roulant 4a ou de portique 4b circule sur deux rails parallèles 5. Une partie seulement de ces éléments a été représentée en Fig. 1. La poutre 4 porte un chariot 6 pourvu d'un mouffle 7 équipé d'un crochet 32 qui supporte un préhenseur 8 auquel on accroche le porteur 9. Un robot 10 évoquant la forme d'un bras articulé est fixé sur le porteur et est équipé d'un outil 11, ici une torche de soudage. Le bras de robot 10 est relié par un câble ombilical 12 à un générateur de courant de soudage 13. Le câble ombilical 12 comprend un conducteur pour le courant de soudage, une fibre optique qui constitue le bus 109 de transmission d'information, deux conducteurs élect riques pour l'alimentation de puissance des moteurs 103. Le bus optique 109 des générateurs 13 de soudage est connecté au superviseur (qui comprend le processeur frontal 115) installé dans une salle de commande. De la cabine de commande 14 sont commandés les mouvements de la poutre 4, du chariot 6 et du mouffle 7. De cette cabine 14 on commande en outre le préhenseur 8 par l'intermédiaire de moyens de transmissions symbolisés en 15.

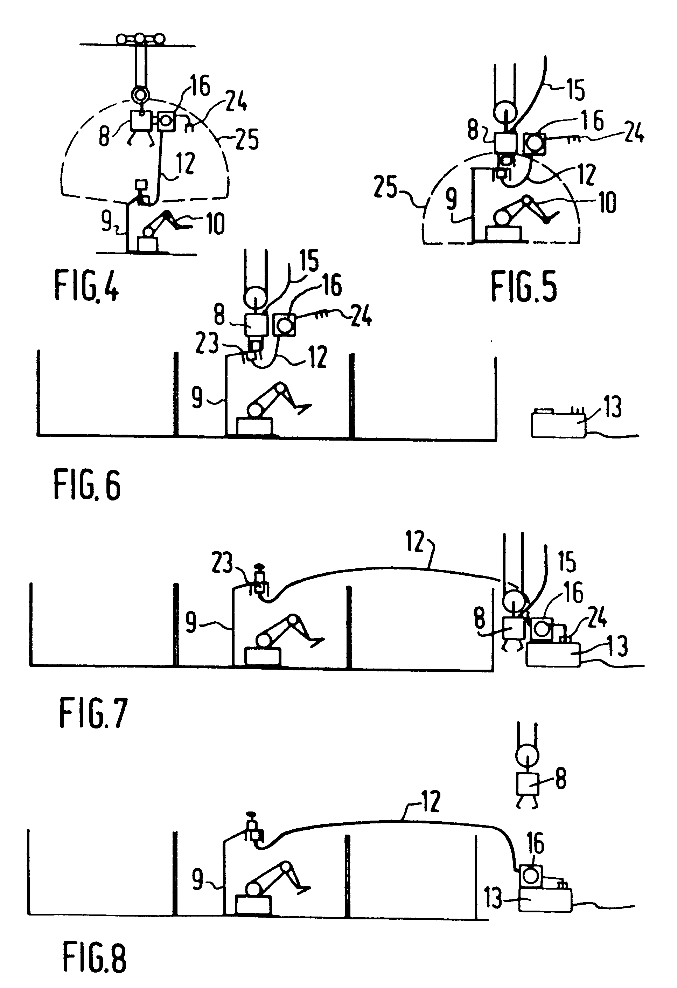

En fait, lorsque le porteur 9 est soulevé par le préhenseur 8 comme cela est représenté sur la Fig. 1, le câble 12 est débranché et enroulé sur l'enrouleur 16 représenté aux Fig. 4 à 8.

On a représenté en 17 un poste d'échange d'outils ou de porteurs.

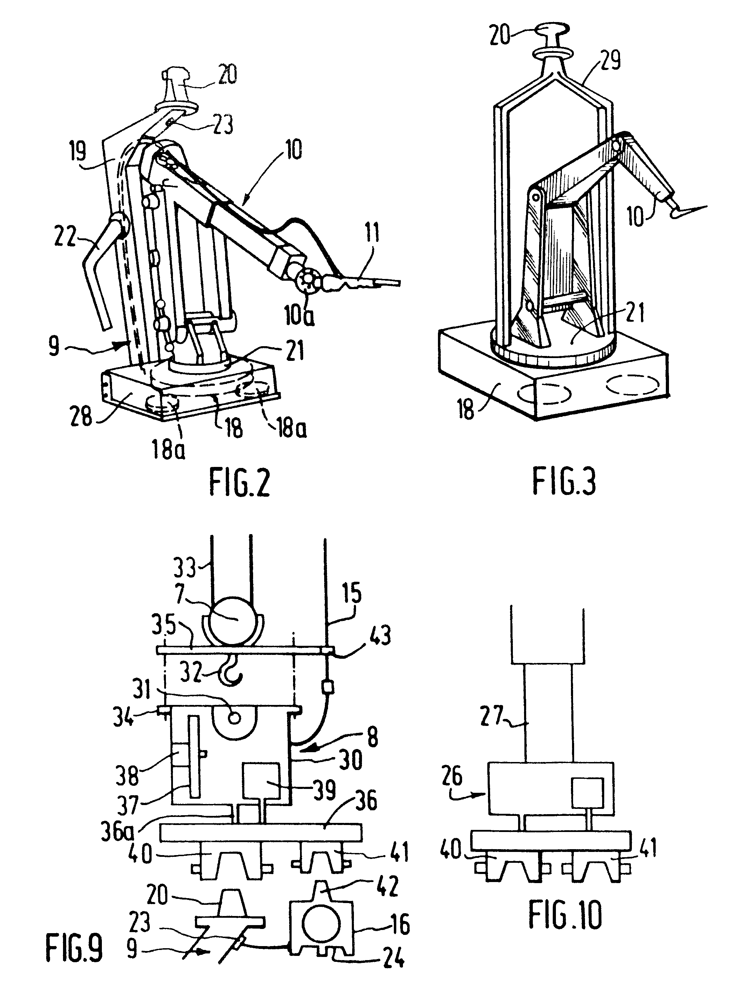

La Fig. 2 montre un couple robot porteur formé d'un bras de robot 10 de classe fixe et de son porteur 9. Le porteur 9 est constitué par une platine 18 pourvue à sa partie inférieure d'électro-aimants 18a pour sa fixation sur le fond d'un compartiment 3, et sur cette platine 18, une potence verticale fixe 19 munie à son extrémité supérieure d'une pièce d'accrochage 20, en forme de "T" qui peut coopérer avec un organe de prise (telle une pince) qui fait partie du préhenseur 8. La platine 18 contient également une bobine de fil de soudage 28, en cassette, la gaine contenant le fil de soudage passe à travers la potence 19 pour aller à la torche de soudage 11, mais peut aussi passer intérieurement au bras 10 dans certains modes de réalisation. La platine 18 porte en outre une embase 21 circulaire sur laquelle est fixé de façon amovible le bras robotique 10 qui peut tourner sur la dite embase 21 autour d'un axe vertical, et qui comporte de façon classique des articulations et un dispositif d'accrochage démontable de l'outil 11. Avantageusement la potence 19 est montée de façon à pouvoir tourner autour d'un axe vertical, Fig. 2. Pour éviter que cette potence gêne les mouvements du bras, on peut lui donner la forme d'un arceau 29, Fig. 3, placé de part et d'autre du bras 10, solution plus légère que celle de la potence unique, et dans ce cas l'arceau 29 tourne sur l'embase 21.

Des moyens sont prévus pour pro téger le bras 10, selon la Fig. 2 des fers 22 montés à pivot sur la potence 19 peuvent passer d'une position avancée, où ils protègent le bras 10 contre les chocs en cours de manutention, à une position reculée, où ils ne gênent pas les mouvements du même bras 10. Dans une variante les fers 22 sont remplacés par une cloche grillagée 25 solidaire du préhenseur 8 et protégeant le couple robot porteur 9, 10 pendant le transport.

Un connecteur 23 placé vers la pièce d'accrochage 20 permet le raccordement avec le câble 12, pourvu d'une pièce de connecteur complémentaire. Un autre connecteur est prévu dans l'embase 21 qui sert à monter à rotation le bras 10 sur la platine 18.

Les Fig. 4 à 8 montrent les différentes phases d'une opération de transfert de l'ensemble bras-porteur 10 d'un poste de travail à un autre.

A la Fig. 4 le préhenseur 8 porte l'enrouleur 16 sur lequel est enroulé le câble 12, déconnecté du générateur de soudage 13, mais connecté au porteur 9. Le préhenseur 8 se trouve au-dessus du porteur 9 et va amorcer une descente vers celui-ci.

A la Fig. 5 le préhenseur 8 a été descendu jusqu'au porteur 9 et l'accrochage de ces deux éléments a été réalisé. Le préhenseur 8 a ensuite été élevé avec l'ensemble bras-porteur 10, 9, qui se trouve au-dessus du sol, en cours de déplacement vers le nouveau poste de travail.

A la Fig. 7 le préhenseur 8 séparé du porteur 9 a été élevé puis amené au poste de commande, entraînant derrière lui le câble 12 qui s'est déroulé de l'enrouleur, celui-ci tournant librement. Un connecteur 24 porté par l'enrouleur 16 est relié à l'extrémité du câble 12 qui est opposé au porteur, a été branché sur le générateur de soudage 13 si bien que le bras robotique 10 peut commencer à travailler.

A la Fig. 8 le préhenseur a été déconnecté de l'enrouleur. De ce fait, le préhenseur 8 et tout le pont sont libérés pour d'autres opérations.

Quand l'ensemble bras-porteur 10, 9 aura fini d'opérer dans son poste de travail, le préhenseur 8 reviendra accrocher l'enrouleur, qui aura été déconnecté du générateur de soudage 13 ou le sera ensuite, puis le préhenseur 8 est transféré dans une position telle que représentée à la Fig. 4. On notera que l'enrouleur peut être du type à rotation libre et ressort d'enroulement. Le câble 12 reste donc sous tension pendant que l'enrouleur se rapproche de la position décrite à la Fig. 4.

Le générateur de courant de soudage 13 est équipé pour recevoir l'enrouleur en assurant la connexion du câble ombilical 12 grâce à une embase tronconique élargie vers le haut, et pourvu de moyens pour le branchement automatique des différents éléments du câble ombilical 12 : bus optique, câble de puissance électrique, gaz protecteur, eau de refroidissement etc.. Les informations amenées par le bus optique sont transmises à un "superviseur" placé dans un poste de commande et dont la structure sera décrite ci-après.

Dans une version simple, le porteur est fixe et les seuls actionneurs dont il dispose sont des électroaimants 18a, ou autres moyens d'accrochage sur une surface support du poste de travail pour son immobilisation au lieu de travail. Les mouvements de l'outil, au poste de travail sont assurés par le seul bras de robot qui a les degrés de liberté nécessaire.

Le porteur 9 peut aussi être mobile en étant équipé de pieds qui peuvent se déplacer pas à pas et sont munis de moyens d'accrochage sur une surface support. Pour une bonne qualité du travail on doit prévoir soit d'arrêter l'outil pendant le déplaceqment du porteur 9 ce qui n'est pas toujours possible, en soudage notamment, soit de faire des petits pas et compenser les mouvements discontinus du porteur par des mouvements appropriés du bras de robot, notamment du poignet 10a, ce qui est une complication au niveau des moyens de commande, mais aussure la précision du résultat.

Dans une variante intéressante, le porteur est en deux parties dont l'une est fixe et constitue un rail ou un chemin de déplacement pour l'autre partie qui peut alors se déplacer de façon continue pendant le travail. La partie fixe peut être une poutre rigide fixée soit au fond d'un compartiment 3, soit au sommet de deux cloisons raidisseuses limitant un compartiment. La partie fixe peut également être une poutre souple du type "BUG-0" commercialisée par la société HOBARD qui épouse la surface support , et qui porte des saillies telle une crémaillère. La fixation de ces poutres peut comprendre des ventouses magnétiques ou à dépression, ou bien des pinces à tôle en prise avec des saillies ou des cloisons raidisseuses avec éventuellement, dans le cas de poutre rigide, des étais télescopiques pour un positionnement à hauteur convenable. Ces moyens de fixation peuvent être euxmêmes déplaçables, permettant par exemple le déplacement d'une poutre rigide perpendiculairement à elle-même sur le sommet de cloisons entre compartiments.

La seconde partie d'un tel porteur est un chariot qui se déplace le long de la poutre, et supporte le bras de robot. On peut prévoir des poutres pourvues de rallonges si cela est nécessaire. Le choix d'un porteur ou d'un autre est du ressort d'un bureau des méthodes, et l'échange des porteurs s'effectue au poste d'échange 17 d'outils et de porteurs, qui comporte un stockage d'un certain nombre de porteurs de différents types, interchangeables pour un même bras de robot.

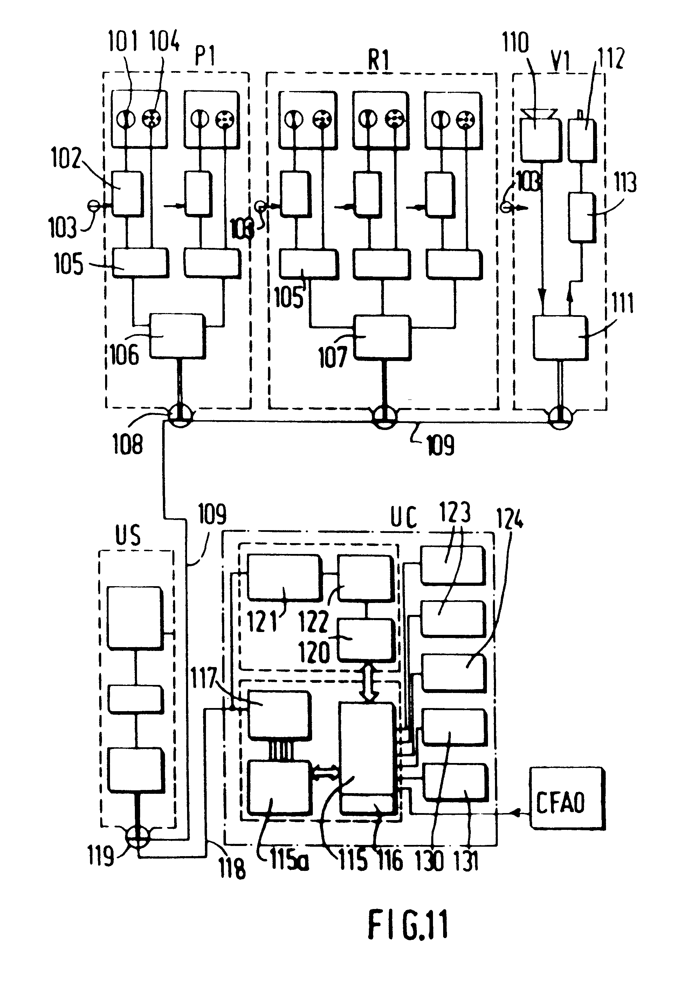

Le même poste d'échange 17 constitue également un magasin pour les outils de différents types. Parmi ceux-ci on peut prévoir notamment : une torche de soudage "MIG/MAG", une torche "TIG", des dispositifs de découpage de tôle, de préparation de chanfrein, d'ébarbage, de meulage, de gougeage, de contrôle optique, de contrôle par ultrasons, par gammagraphie, etc.. Comme on l'a indiqué plus haut, un appareil d'inspection optique peut bénéficier d'une électronique simplifiée VI, Fig. 11.

La Fig. 9 est un schéma éclaté de détail d'un modèle du préhenseur 8 et des organes qui coopèrent avec lui. La préhenseur 8 comprend un carter supérieur 30, pourvu d'un axe support 31 destiné à coopérer avec le crochet 32 du pont roulant, supporté par le moufle 7 suspendu au câble porteur 33. Le carter 30 comporte des ailes 34 qui sont fixées par des vis (non représentées) aux bords d'une plaque stabilisatrice 35 solidaire du moufle 7. Le carter 30 porte par l'intermédiaire d'un arbre vertical 36a une platine tournante 36. A l'intérieur du carter sont placés, un stabilisateur gyroscopique composé d'un rotor à axe horizontal 37 entraîné en rotation à grande vitesse par un moteur 38, et un motoréducteur 39 entraîne en rotation la platine 36. Ici on a prévu un stabilisateur gyroscopique, mais évidemment il n'est pas le seul stabilisateur possible.

A la face inférieure de la platine tournante 36 sont fixés deux dispositifs d'accrochage à verrou électromagnétique 40, 41. Le premier est construit pour coopérer avec la pièce d'accrochage 20 du porteur 9, Fig. 2. Le second, de construction analogue, est conçu pour coopérer avec une pièce d'accrochage analogue 42 solidaire de l'enrouleur 16. Le câble de liaison 12 sort latéralement de l'enrouleur pour aller au connecteur 23 porté par la potence 19 du porteur 9. L'enrouleur 16 comporte à sa base une prise 24 à enclenchement automatique : lorsque l'enrouleur 16 est déposé sur un support approprié du générateur de soudage 13, le câble 12 est automatiquement connecté. Rappelons que ce câble comprend le bus optique 109 qui est relié au processeur central 115 par le connecteur 119 lorsque la prise 24 est enclenchée. Le câble 12 comprend en outre les conducteurs d'alimentation en énergie des divers actionneurs du porteur et du bras de robot, du conducteur de courant de soudage, des conduites de gaz de protection de soudage, de fluide de refroidissement etc.

Le préhenseur 8 est alimenté en énergie et signaux de commande par un câble 15 relié à la cabine 14 du pont roulant 4.

Une prise déconnectable 43 portée par la plaque stabilisatrice 35 permet d'interrompre la liaison si on désire utiliser le crochet 32 en ayant enlevé le préhenseur 8.

La Fig. 10 est relative à une variante du préhenseur et son mode de fixation. Ce préhenseur 26 est relié au chariot 6 de la poutre porteuse 4, non plus par un mouffle 7 suspendu à un câble porteur 33, mais par une tige télescopique 27 de préférence à section carrée qui rend inutile la présence d'un stabilisateur télescopique. Une telle tige 26' est représentée en Fig. 1 en liaison avec le portique 4b.

On observe sur cette Fig. 1 que le portique 4b est d'une largeur assez importante. Cela correspond au fait que le poste 17 d'échange d'outils et de porteurs a été disposé dans ce portique, plutôt que sur le bord de l'atelier. Cette variante, un peu plus perfectionnée permet des gains de temps appréciables au cas où les changements d'outil ou de porteur sont fréquents.

La Fig. 11 est un schéma de blocs opto-électroniques d'un mode préféré de réalisation particulière de l'installation. Sur cette figure la partie supérieure représente des éléments mobiles et la partie inférieure des éléments fixes, la liaison entre les deux séries d'éléments étant assurer par l'intermédiaire du câble de liaison 12.

Les éléments mobiles comprennent un élément porteur P1, un élément bras robot R1 et facultativement un élément vision V1. L'atelier est équipé de plusieurs ensembles porteur-robot, il y a donc plusieurs éléments analogues tels que P1, R1, V1, etc.. Ces éléments sont interchangeables.

Les éléments fixes comprennent le poste de supervision ou "superviseur" de commande UC, et dans le cas ou l'outil est un outil de soudage, une unité de soudage US.

La structure des éléments porteur P1 et bras robot R1 est sensiblement la même : pour chaque mouvement possible : rotation, coulissement éventuellement suivant deux directions, mise en action d'électro-aimants, etc., un actionneur 101 commandé par une carte de puissance 102 reliée à une alimentation 103 et un capteur 104 sont reliés à une interface E/S 105 sans constituer une boucle d'asservissement, cette dernière étant reportée au niveau de superviseur. Cette disposition évite les interférences de parasites dans cette position sensible. Toutes les interfaces de l'élément porteur P1 ou de l'élément robot R1 sont reliées à un décodeurmultiplexeur-démultiplexeur commun 106, 107 qui transforme les signaux électriques en signaux optiques et vice versa. Les signaux optiques passent à travers un connecteur optique 108 vers un bus optique 109. Le câble de liaison 12 comprend le bus optique 109 dans sa partie centrale. 11 comprend également les câbles d'alimentation électrique de puissance des actionneurs. Il comprend encore, dans le cas de soudage, le câble d'alimentation en courant de soudage, éventuellement des conduites de gaz de soudage, de fluide de refroidissement, etc.

L'élément vision V1, quand il est prévu, peut comprendre, au lieu d'une caméra vidéo, une optique 110 dont les informations qu'elle trensmet sont envoyées au bus optique 109 après passage dans un codeur optique 111 sans être transformées en signaux électriques. L'élément V1 comprend en outre un laser 112 relié à une alimentation 103 par une interface 113 elle-même reliée au codeur optique 111.

L'élément essentiel du poste de supervision UC est un processeur frontal 115 de grande puissance, pourvu d'une mémoire de masse 116. Le processeur 115 est relié par l'intermédiaire d'un ensemble à microprocesseurs multiples 115a qui assure les boucles d'asservissement à un multiplexeur-démultiplexeur-décodeur 117 qui transforme les signaux issus de l'ensemble 115a en signaux optiques et vice versa, et qui est connecté à une partie 118 du bus optique, laquelle est reliée au reste du bus optique 109 à travers un connecteur optique 119 qui fait partie du connecteur 24. Le processeur frontal 115 est en outre relié à un processeur rapide 120, qui traite les signaux provenant de l'optique qui passsent à travers un démultiplexeur optique 121 et un dispositif de traitement des signaux optiques 122.

Un des points importants de l'invention porte sur le centre de programmation. La masse d'informations à fournir aux couples robots porteurs provient de deux sources différentes :
- extérieures (CFAO, opérateur),
- saisies locales (acquises par le robot lui-même sur le lieu de travail en temps réel)

Le système robotisé est relié à une base de données CFA0 200 existante qui peut être le système connu sous le nom de "SICEN" (Système Informatique pour la Conception et l'Etude du Navire), qu'on ne décrira pas ici.

Le centre de programmation 212 permet la modélisation d'un quelconque type de robot, la simulation graphique de ses tâches, la programmation automatisée hors ligne de celles-ci, par représentation graphique et sans intervention en atelier et enfin l'ordonnancement de toutes les alvéoles du bloc.

Pour cela, le préparateur, installé dans un poste de programamation 212 relié aux différents bases de données, dispose d'outils simples pour dialoguer et concevoir les tâches à faire réaliser par le robot (langage évolué, crayon lumineux, menu, etc..) non représentés. Il dispose aussi de moyens de visualisation 208.

Le centre de programmation, à partir de la base de données CFA0, fournit l'ensemble des informations nécessaires au fonctionnement automatique des robots dans l'atelier.

Les informations issues de la base de données CFA0 sont considérées comme théoriques : par conséquent le travail du centre de programmation n'est qu'une conception théorique des tâches. Le poste de supervision a pour charge d'adapter l'ensemble de ces informations à son environnement réel dans l'atelier.

La préparation des informations définissant les tâches que le couple robot porteur réalise ne donne jamais lieu à un retour d'informations du poste de supervision vers la CFA0.

Les consignes de fonctionnement indispensables du centre de programmation sont répertoriées en :

- consignes de trajectoire (outil), géométrie, vitesse, déplacement d'une zone de travail à une autre,
- consignes de travail à exécuter,
- consignes de positionnement (porteur), point d'indexation,
- consignes d'intervention opérateur, dialogue opérateur - UFRT,
- etc.

Les moyens de vérification par visualisation et par simulation au niveau de la cellule sont :

- vérification des consignes et trajectoires,
- vérification des consignes de travail,
- verification des consignes de positionnement,
- vérification de l'adéquation des moyens mis en oeuvre pour réaliser la tâche,
- vérification de la cohérence de l'ensemble des informations, - etc.

Les consignes peuvent être modifiées.

Les informations théoriques définissant les séquences de travail à réaliser par les robots sont mémorisées par bloc dans une base de données à partir de laquelle l'opération est réalisée. Toutes les informations sont transférées sur un support matériel (disque, ruban, cassette) et ensuite transmises au superviseur, ou peuvent être transmises directement au superviseur. La gestion statistique permet de comptabiliser et de gérer les séquences de travail (longueurs de parcours, temps, etc..) et les couples robot-porteur dans chaque alvéole.

L'interface CFA0 informatique 202 permet la liaison avec n'importe quelle CFA0 existante au niveau amont de la conception de la structure du navire. La CFA0 peut être le système SICEN. La modularité de cette interface permet son adaptabilité à d'autres systèmes de CFA0.

Les informations géométriques, topologiques et de travail générées dès la conception et extraites par l'interface sont mémorisées dans une base de données dite "géométrique" 203. L'entité concernée sera le bloc de structure métallique.

A partir d'un écran alphanumérique et graphique 208, l'opérateur a la possibilité de donner le numéro du bloc de structure métallique dont les éléments sont extraits de la CFA0.

L'interface effectue le transfert et les transformations nécessaires.

La CFA0 existante peut être éventuellement complétée par des informations spécifiques à l'application "robotisation du soudage".

La base de données géométriques est remplie par les programmes de l'interface avec la CFA0 et consultée par les programmes de préparation et/ou de simulation des tâches de travail. Elle contient les informations géométriques, topologiques et de soudage extraites de la CFA0, de tous les éléments (tôles, profilés, goussets, etc..) permettant la reconstitution du bloc en trois dimensions (3D).

Les programmes informatiques de description des couples robot porteur 204 permettent la description des morphologies et des cinématiques des couples utilisés. Les informations ainsi générées sont mémorisées dans une base de données nommée "base de données descriptive des robots", 205.

La description de la morphologie des engins de soudage est faite par assemblage de volumes géométriques standards (parallélépipède, tronc de cône, etc.) constituant l'outil, les bras, le porteur. Un langage informatique de la description est mis à la disposition du préparateur.

La description de la cinématique permet la représentation graphique de l'évolution des mouvements d'un couple robot porteur. Elle prend en compte les capacités de tous les degrés de liberté et les lois qui régissent chaque articulation.

La base des données descriptives des couples robot porteur est remplie par les programmes de description des couples robot porteur et consultée par le logiciel de simulation. Cette base de données contient toutes les informations géométriques et cinématiques de tous les éléments constitutifs des différents couples pouvant être utilisés.

Les programmes de description des standards de travail 206 permettent à partir de tableaux, l'établissement de liaisons standardisées entre les différents types de paramètres. Les informations ainsi générées sont mémorisées dans une base de données nommée "base de données des standards de travail" 207.

L'établissement des relations standardisées est faite par liaisons hiérarchisées entre les différents paramètres, en fonction des lois usuellement employées dans les méthodes de travail de la construction navale.

Ces relations sont standardisées mais non figées. Les programmes permettent la modification ou le remplacement d'un ou plusieurs paramètres de la liaison hiérarchisée en fonction des besoins spécifiques.

La base de donnée des standards travail est remplie par les programmes de description des standards et consultée par les programmes de préparation des séquences de travail. Toutes les informations définissant les relations standardisées entre les différents types de paramètres y seront mémorisées.

La préparation des tâches de travail est faite à partir d'une représentation graphique tridimensionnelle 208 du bloc à traiter. Cette représentation graphique comporte tous les éléments du bloc (tôles profilés, goussets, montants, etc.). Aucun tracé n'est caché, ils sont éventuellement représentés en pointillés dans leur partie cachée. Les possibilités graphiques sont le grossissement, la rotation de l'ensemble représenté, l'interactivité, la surbrillance sélective.

Les programmes de préparation des tâches de travail à faire réaliser par les robots permettent la réalisation des opérations suivantes et leur enchaînement.

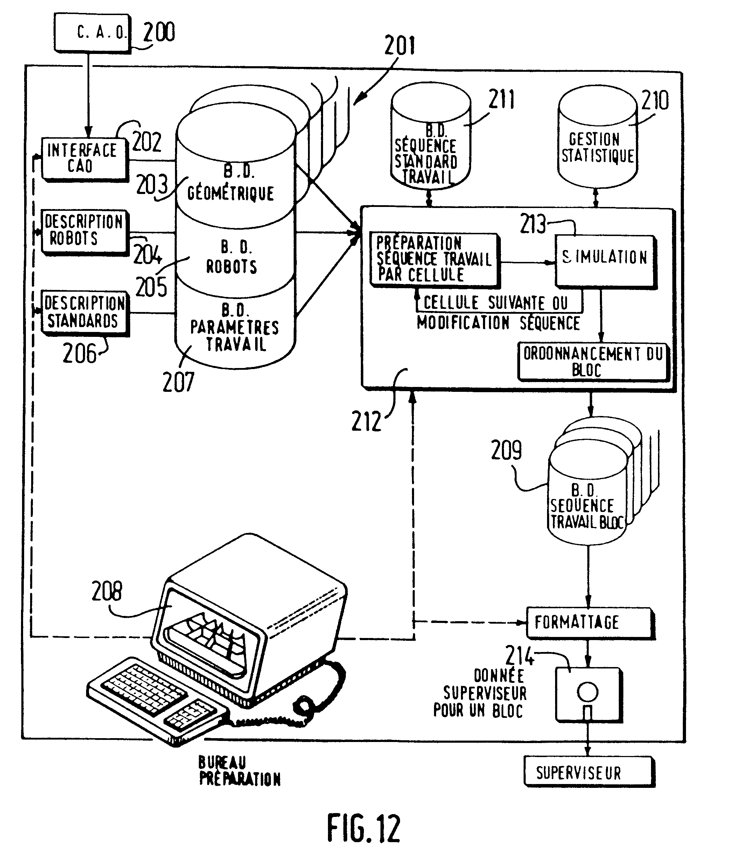

L'initialisation de la base de données des séquences de travail 209 comporte la transmission dans la base de données de l'identification du bloc à souder sous forme de message opérateur, transmis au superviseur (voir Fig. 12), par exemple sur un support matériel (disquette) 214, ou directement.

Sont transmises par le même principe, la liste des éléments des moyens prévus par la préparation pour la réalisation des séquences de travail et la signature du bloc (capteurs, vision, etc.)

La réalisation du positionnement du bloc tel qu'il est présenté en atelier s'appuie sur les possibilités du logiciel graphique (retournement par exemple). Les résultats sont transmis dans la base de donnée "séquence de travail" 209, puis au superviseur pour vérification de la position en préparation du bloc en atelier.

Des points d'indexation définissent la position des capteurs (ultrasons, infrarouges...) permettant de situer le bloc dans l'atelier. La reconnaissance du référentiel lié au bloc dans le référentiel lié à l'atelier permet au superviseur de détecter la position du bloc et d'effectuer toutes les transformations nécessaires des définitions géométriques des éléments (tôles, profilés..).

Le choix du positionnement de ces trois éléments est privilégié (joints, liaisons ..).

L'alvéole ou cellule est l'entité élémentaire du bloc. Elle est limitée par des tôles ou des profilés et est définie par la préparation. Elle délimite la zone de travail d'un robot par frontières. Toutes les cellules ainsi définies dans un bloc sont identifiées par leurs frontières répertoriées. La liste des cellules est transmise au préparateur pour contrôle de la préparation des séquences sur tout le bloc et pour l'aide à l'ordonnancement du bloc.

La cellule choisie dans le bloc est extraite visuellement par effet de boîte à partir de la représentation graphique tridimensionnelle du bloc. Une information sur les dimentions de l'alvéole est indiquée sur l'écran.

Une fois cette opération effectuée, le programme établit la liste de l'ensemble des zones à traiter dans la cellule et associe à chacune les paramètres fournis par la CFA0 (SICEN).

L'extraction et le traitement d'une zone s'effectue à partir de la représentation graphique tridimensionnelle de l'alvéole. La zone est sélectionnée (par crayon de saisie par exemple). Sa définition graphique apparaît en surbrillance. Son identification dans la liste des joints de l'alvéole doit être distincte des autres identifications.

La sélection d'un joint de soudure est effectuée en désignant le point de départ du cordon de soudure à réaliser.

D'une part, le programme doit déduire automatiquement de la base de données géométrique 203, l'environnement de travail : cette information apparaît à l' écran pour permettre une correction éventuelle de cet environnement sur l'initiative du préparateur , d'autre part à partir des informations mémorisées dans la base de données des standards de travail 206, il déduit l'ensemble standard des paramètres à affecter à la zone sélectionnée : cet ensemble apparaîtra aussi à l'écran graphique et pourra être éventuellement modifié.

Toutes les informations ainsi générées sont mémorisées dans la base de données des séquences de travail 209.

Une base de données "gestion statistique" 210 se trouve enrichie de nouvelles information de temps, de longueurs et autres.

Une base de données "standard de séquence de travail" 211 est aussi mise à jour.

La vérification et l'organisation des séquences sur l'ensemble des zones de l'alvéole est faite par programme. Cela permet au préparateur de vérifier que toutes les zones à traiter par les robots sont traitées et d'organiser, en fonction des méthodes, la suite logique des séquences de travail par désignation des zones.

Les bases de données 209, 210, 211 seront mises à jour et enrichies des informations ainsi générées.

Le choix du couple robot porteur est effectué à partir de la base de données descriptive des couples et des dimentions de l'alvéole à traiter. Une fois choisi il est positionné au mieux dans l'alvéole.

Le programme doit effectuer tous les calculs permettant de savoir si les dimensions du couple sélectionné et celle de l'alvéole sont compatibles.

Ces opérations effectuées, les informations définissant le couple choisi, sa position et son orientation sont mémorisées dans la base de données travail du bloc.

Les trajectoires d'accès aux séquences sont les trajectoires suivies par le couple. Elles permettent d'approcher rapidement la position de départ du travail.

Dans le cas de franchissement d'obstacles, le préparateur adapte des trajectoires standardisées, paramétrées et préalablement décrites, pour réaliser la liaison entre zones. Ces opérations effectuées, une vérification de toutes les liaisons entre zones devra être réalisée par le programme.

La simulation et la vérification d'exécution permettent la verification des mouvements du couple exécutant les séquences, précédemment établies pour une alvéole. Cela permet, d'une part de détecter toute collision intempestive, toute inaccessibilité, et d'autre part de diminuer sensiblement les temps d' immobilisation des robots dans l'atelier et de travailler en toute sécurité.

Les modifications de séquences sont possibles, suite aux indications du programme de simulation.

Cette vérification effectuée, la base des données "soudage du bloc" est mise à jour définitivement pour l'alvéole. La base de données "gestion statistique" et "séquence standard" sont éventuellement mises à jour.

Toutes les alvéoles ayant été traitées, le préparateur dispose d'un outil informatique lui permettant de vérifier que toutes les alvéoles ont été traitées et d'en réaliser l'ordonnancement. Les bases de données "gestion statistique" et "soudage du bloc" sont enrichies de ces informations. La base de données "standard de séquences de travail" est remplie par le préparateur lors de la préparation des séquences de soudage dans une alvéole. Elle mémorise toutes les séquences de travail jugées standards.

Ces séquences standardisées sont utilisées soit pour d'autres zones soit pour d'autres alvéoles d'aspects topologiques semblables. Elles peuvent être utilisées d'un bloc à l'autre.

La base de données "gestion statistique" contient toutes les informations concernant :
- le nombre de zones de travail,

- les caractéristiques des zones (longueur, surfaces, etc..) dans un bloc (multi-passes incluses) pour un navire,
- les temps de réalisation dans une alvéole, dans un bloc pour un navire,
- les temps de travail,
- les temps moyens entre panne (Mean Time Between Failure).

Cette base de, données est évolutive, la liste des informations n'étant pas exhaustive.

La base de données "travail" est remplie par les programmes de préparation, simulation, ordonnancement et consultée par le programme de génération de commande et le programme de formattage. Elle mémorise toutes les informations décrites précédemment.

L'ensemble des commandes exécutables par le superviseur sont les suivantes pour un bloc :
- commandes de génération de messages sur le pupitre du robot pour :
  • vérification de la conformité du bloc (par signature et/ou identification),
  • vérification du positionnement du bloc dans l'atelier,
  • vérification de la présence de l'ensemble des moyens nécessaires à la réalisation des tâches de soudage,
- commandes pour initialisation du porteur (indexation), commandes pour positionnement de l'engin de soudage et désaccouplement,
- Commandes d'exécution des séquences par blocs d' informations, permettant des reprises éventuelles en cas d'arrêts,
- commande pour permettre au moyen de transport de reprendre l'engin de soudage et le positionner dans une alvéole voisine en tenant compte de certaines impossibilités (alvéoles occultées),
- génération du graphe des alvéoles permettant d'ordonnancement des tâches des engins de soudage.

La centrale de programmation ainsi conçue réalise les objectifs suivants :
- elle décharge le superviseur de toute la conception des séquences de travail,
- elle permet un travail en temps masqué,
- elle permet le maximum de vérification avant l'exécution des tâches en atelier,
- elle permet de s'affranchir du problème de langage spécifique des robots.

**Revendications**

1. Installation mobile automatique qui comprend :
   a) un poste de travail pourvu d'au moins un outil de travail pour réaliser un travail sur un objet,

b) un centre de programmation recevant et mettant en mémoire des informations nécessaires relatives aux objets sur lesquels un travail doit être effectué et des caractéristiques techniques sur les possibilités des outils nécessaires pour réaliser le travail, ledit centre de programmation étant relié audit poste de travail, et comprenant :

(i) une base de données "géométriques" recevant et mettant en oeuvre des données concernant les objets sur lesquels un travail doit être effectué,

(ii) une base de données "outillage" contenant les données techniques quant aux outils de travail,

(iii) une base de données "paramètres de travail" contenant les standards de travail,

c) un poste de supervision relié audit centre,

d) une base de données reliée audit poste de supervision et la ladite base de données recevant et stockant des données relatives à une séquence de travail, afin de recevoir et transmettre lesdites données sur ladite séquence de travail audit poste de supervision,

e) une base de données de gestion statistique reliée, d'une part, à ladite base de données recevant et stockant des données relatives à la séquence de travail et, d'autre part, au poste de préparation du travail,

ladite installation étant caractérisée par le fait qu'elle comprend aussi :

f) des moyens pour déplacer ledit poste de travail d'un lieu à un autre qui supportent ledit poste de travail

g) des moyens pour détecter l'environnement dudit poste de travail en relation avec celui-ci afin de déterminer la position dudit poste de travail lesdits moyens pour déplacer et lesdits soyens pour détecter étant reliés audit centre de supervision afin de recevoir l'information programmée à partir dudit centre de programmation, de détecter la présence d'au-moins un outil et communiquer des instructions auxdits moyens pour déplacer sur la base de ladite information programmée,

h) un poste de préparation de travail relié audit centre de programmation afin de préparer une séquence de travail correspondant aux données concernant les objets sur lesquels un travail doit être effectué, ledit poste comprenant :

(i) des moyens pour exécuter une simulation visuelle pour décrire lesdits objets,

(ii) une base de données recevant et stockant des données relatives à ladite séquence de travail.

2. Installation seton la revendication 1, caractérisée par le fait que lesdits objets sont un bateau comprenant au moins un groupe constitué d'un ensemble de cellules.

3. Installation selon la revendication 1, caractérisée par le fait que le centre de programmation comprend un microprocesseur-maître et que le poste de supervision comprend un microprocesseur-esclave relié audit microprocesseur-maître.

4. Installation selon l'une quelconque des revendications 1 à 3, caractérisée par le fait que le poste de travail comprend un robot formé d'un bras articulé (10) ayant plusieurs axes de rotation comprenant des moyens moteurs, ledit bras ayant une extrémité reliée à un outil (11) et l'autre extrémité étant reliée à un porteur (9) pourvu de moyens d'accrochage de l'objet, que les moyens pour déplacer ledit poste de travail comprennent une poutre porteuse (4), laquelle installation comprend aussi des moyens pour assurer une liaison mécanique entre ledit porteur (9) et ladite poutre porteuse (4), de telle sorte que ledit porteur (9) puisse être déplacé d'un lieu à un autre.

5. Installation selon la revendication 4, caractérisée par le fait qu'elle comprend en outre des moyens de commande et d'alimentation en énergie électrique des moyens moteurs et de l'outil.

6. Installation selon la revendication 4, caractérisée par le fait que le porteur (9) est muni d'une potence (29) en forme d'arceau ayant des montants placés de part et d'autre du bras (10).

7. Installation selon la revendication 6, caracérisée par le fait que ledit porteur (9) comporte aussi une embase (21) tournante sur laquelle est montée la potence en forme d'arceau (29).

8. Installation selon la revendication 7, caractérisée par le fait que le porteur (9) comporte une platine (18) à la face supérieure de laquelle est située l'embase (21) et à la face inférieure de laquelle sont disposés des moyens de fixation.

9. Installation selon la revendication 8, caractérisée par le fait que le porteur (9) comprend également des moyens pour protéger le bras.

10. Installation selon la revendication 9, caractérisée par le fait que les moyens pour protéger le bras sont constitués par une cloche (25) pouvant recouvrir le porteur (9) et le robot muni du bras (10).

11. Installation selon la revendication 4, caractérisée par le fait que les moyens pour assurer une liaison mécanique entre le porteur (9) et la poutre porteuse (4) sont constitués par un préhenseur (8) qui peut tourner autour d'un axe vertical, qui est relié à un chariot mobile (61) associé à ladite poutre porteuse (4) et qui est muni de la cloche (25).

12. Installation selon la revendication 11, caractérisée par le fait que le préhenseur (8) est pourvu d'un stabilisateur comportant un votant gyroscopique (37) à axe horizontal et des moyens pour faire tourner ledit préhenseur (8) autour d'un axe vertical par rapport audit stabilisateur afin d'orienter convenablement ledit préhenseur (8).

13. Installation selon la revendication 12, caractérisée par le fait que le préhenseur porte en outre des moyens déconnectables d'accrochage à un enrouleur (16) pouvant supporter les moyens de liaison (12) reliant les moyens de commande et d'alimentation pour l'outil ( 11 ) du bras du robot (10).

14. Installation selon l'une quelconque des revendications 4 à 13, caractérisée par le tait que le porteur (9) est en deux parties, l'une étant susceptible d'être fixée par rapport à l'objet et l'autre pouvant se déplacer le long de la première.

15. Installation selon l'une quelconque des revendications 4 à 14, caractérisée par le fait que te porteur (9) se déplace à petits pas, des mouvements appropriés du bras (10) faisant compensation.

16. Installation selon la revendication 15, caractérisée par le fait que le poste de supervision comprend des moyens pour commander et stocker des logiciels, l'atelier et lesdits moyens étant regroupés dans un processeur unique situé au -niveau des moyens pour commander et stocker, le bras du robot (10) et son porteur (9) comprenant des codeurs-décodeurs et les moyens électriques et mécaniques nécessaires et leurs commandes directes de puissance étant reliés auxdits codeurs-décodeurs.

**Claims**

1. An automatic mobile installation which comprises:

a) a work station provided with at least one working tool to carry out a piece of work on an object,

b) a programming centre receiving and storing necessary data relating to the objects on which the work is to be carried out, and technical characteristics regarding the possibilities of tools necessary to carry out the work, said programming centre being connected to said work station, and comprising:

(i) a base of "geometric" data receiving and implementing data concerning the objects on which a piece of work is to be carried out,

(ii) a base of "tool" data containing the technical data relating to the working tools,

(iii) a base of "work parameters" data containing the standards of working,

c) a supervision station connected to said centre,

d) a base of data connected to said supervision station and said base of data receiving and storing data relating to a working sequence, so as to receive and transmit said data on said working sequence to said supervision station,

e) a base of statistical management data connected, on the one hand, to said base of data receiving and storing data relating to the working sequence and, on the other hand, to the work preparation station,

said installation being characterised by the fact that it also comprises:

f) means for displacing said work station from one place to another, which support said work station

g) means for detecting the surroundings of said work station in relation thereto, so as to determine the position of said work station, said displacing means and said detecting means being connected to said supervision centre in order to receive the information programmed from said programming centre, to detect the presence of at least one tool and communicate instructions to said means to displace on the basis of said programmed information,

h) a work preparation station connected to said programming centre so as to prepare a working sequence corresponding to the data concerning the objects on which a piece of work is to be carried out, said station comprising:

(i) means to execute a visual simulation to describe said objects,
(ii) a data base receiving and storing data relating to said working sequence.

2.  An installation according to claim 1, characterised in that said objects are a boat comprising at least one group constituted by a set of cells.

3.  An installation according to claim 1, characterised in that the programming centre comprises a master microprocessor and that the supervision station comprises a slave microprocessor connected to said master microprocessor.

4.  An installation according to any one of claims 1 to 3, characterised in that the work station comprises a robot formed by an articulated arm (10) having a plurality of axes of rotation comprising motor means, said arm having one end connected to a tool (11) and the other end being connected to a carrier (9) provided with means for attachment of the object, that the means for displacing said work station comprise a carrier beam (4), which installation also comprises means to ensure a mechanical connection between said carrier (9) and said carrier beam (4), such that said carrier (9) can be displaced from one place to another.

5.  An installation according to claim 4, characterised in that it further comprises command means and means to supply the motor means and the tool with electrical energy.

6.  An installation according to claim 4, characterised in that the carrier (9) is provided with a bracket (29) in the form of an arch having uprights placed on each side of the arm (10).

7.  An installation according to claim 6, characterised in that said carrier (9) also comprises a rotating base (21) on which is mounted the arch-shaped bracket (29).

8.  An installation according to claim 7, characterised in that the carrier (9) comprises a stage (18) on the upper face of which the base (21) is situated, and on the lower face of which there are arranged attachment means.

9.  An installation according to claim 8, characterised in that the carrier (9) also comprises means to protect the arm.

10. An installation according to claim 9, characterised in that the means to protect the arm are constituted by a bell-shaped cover (25) which is able to cover the carrier (9) and the robot provided with the arm (10).

11. An installation according to claim 4, characterised in that the means to ensure a mechanical connection between the carrier (9) and the carrier beam (4) are constituted by a prehensor (8) which can turn about a vertical axis, which is connected to a mobile carriage (61) associated with said carrier beam (4) and which is provided with the bell-shaped cover (25).

12. An installation according to claim 11, characterised in that the prehensor (8) is provided with a stabiliser comprising a gyroscopic wheel (37) having a horizontal axis and means to cause the said prehensor (8) to turn about a vertical axis in relation to said stabiliser so as to suitably orientate said prehensor (8).

13. An installation according to claim 12, characterised in that the prehensor further carries disconnectable means of attachment to a winder (16) which is able to support the connection means (12) connecting the command and supply means for the tool (11) of the robot arm (10).

14. An installation according to any one of claims 4 to 13, characterised in that the carrier (9) is in two parts, one being capable of being fixed in relation to the object and the other being able to move along the first.

15. An installation according to any one of claims 4 to 14, characterised in that the carrier (9) moves in small steps, with appropriate movements of the arm (10) as compensation.

16. An installation according to claim 15, characterised in that the supervision station comprises means to command and store software, the workshop and said means being regrouped in a single processor situated at the level of the means to command and store,the robot arm (10) and its carrier (9) comprising encoders-decoders and the necessary electrical and mechanical means and their direct power commands being connected to said encoders-decoders.

**Patentansprüche**

1.  Automatische, bewegliche Einrichtung bestehend aus:
    a) einer mit mindestens einem Werkzeug versehenen Arbeitsstation zur Durchführung einer Arbeit an einem Objekt,

b) einem Programmierzenter zum Empfang und zum Abspeichern von Informationen über die Objekte, an denen eine Arbeit durchgeführt werden soll sowie von technischen Daten über die Möglichkeiten der für die Durchführung der Arbeit erforderlichen Werkzeuge, wobei das besagte Programmierzenter mit der genannten Arbeitstation verbunden ist und folgendes beinhaltet:

(i) eine Bank "geometrischer" Daten zum Empfang und zum Einsatz von Daten über die Objekte, an denen eine Arbeit durchgeführt werden soll,

(ii) eine "Werkzeug"-Datenbank, welche die technischen Daten der Arbeitswerkzeuge enthält,

(iii) eine Datenbank für "Arbeitsparameter", welche die Arbeitsnormen enthält,

c) eine mit dem besagten Zenter verbundene Überwachungsstation,

d) eine mit der genannten Überwachungsstation verbundene Datenbank, welche die Daten über eine Arbeitsfolge empfängt und speichert, um diese Daten über die erwähnte Arbeitsfolge zu empfangen und an die genannte Überwachungsstation zu übertragen,

e) eine Datenbank zur statistischen Verwaltung, welche einerseits mit der genannten Datenbank zum Empfangen und Speichern von Daten über die Arbeitsfolge und andrerseits mit der Arbeitsvorbereitungsstation verbunden ist,

wobei die in Rede stehende Einrichtung dadurch gekennzeichnet ist, daß sie ebenfalls umfaßt:

f) Mittel zum Verfahren der erwähnten Arbeitsstation von einem Ort zu einem anderen und die die Arbeitsstation tragen,

g) Mittel zur Erkennung der Umgebung dieser Arbeitsstation in Verbindung mit letzterer, um die Lage der Arbeitsstation zu bestimmen, wobei die besagten Mittel zum Verfahren und die Mittel zum Erkennen mit der genannten Überwachungsstation verbunden sind, um die programmierte Information von dem erwähnten Programmierzenter zu empfangen, das Vorhandensein mindestens eines Werkzeugs zu erkennen und den genannten Mitteln Anweisungen zu übermitteln, um auf der Grundlage der erwähnten programmierten Information folgendes Element zu verfahren:

h) eine Arbeitsvorbereitungsstation, welche mit dem genannten Programmierzenter verbunden ist, um eine Arbeitsfolge vorzubereiten, die den Daten über die Objekte entspricht, an denen eine Arbeit durchgeführt werden soll, wobei diese Station folgendes umfaßt:

(i) Mittel zur Ausführung einer visuellen Simulation zwecks Beschreibung der erwähnten Objekte,

(ii) eine Datenbank zum Empfangen und Speichern der Daten der genannten Arbeitsfolge.

2. Einrichtung gemäß Anspruch 1, dadurch gekennzeichnet, daß die besagten Objekte ein Schiff sind, welches mindestens eine aus einem Zellenkomplex gebildete Gruppe umfaßt.

3. Einrichtung gemäß Anspruch 1, dadurch gekennzeichnet, daß das Programmierzenter einen Haupt-Mikroprozessor (Meister) enthält, und daß die Überwachungsstation einen mit diesem Haupt-Mikroprozessor verbundenen Neben-Mikroprozessor (Sklaven) enthält.

4. Einrichtung gemäß eines beliebigen Anspruchs 1 bis 3, dadurch gekennzeichnet, daß die Arbeitsstation einen Roboter beinhaltet, welcher durch einen Arm (10) mit mehreren Rotationsachsen und deren Antriebsmitteln gebildet wird, wobei dieser Arm ein Ende aufweist, das mit einem Werkzeug (11) verbunden ist, während das andere Ende mit einer Trägervorrichtung (9) verbunden ist, welche mit Anschlagmitteln für das Objekt ausgerüstet ist, weiter dadurch, daß die Mittel zum Verfahren der Arbeitsstation einen Querträger (4) beinhalten, welche Einrichtung ebenfalls Mittel zur Herstellung einer mechanischen Verbindung zwischen der erwähnten Trägervorrichtung (9) und dem genannten Querträger (4) beinhaltet, so daß die Trägervorrichtung (9) von einem Ort zu einem anderen verfahren werden kann.

5. Einrichtung gemäß Anspruch 4, dadurch gekennzeichnet, daß sie außerdem Steuer- und Stromversorgungsmittel für die Antriebsmittel und das Werkzeug umfaßt.

6. Einrichtung gemäß Anspruch 4, dadurch gekennzeichnet, daß die Trägervorrichtung (9) mit einem spitzbogenförmigen Galgen (29) ausgerüstet ist, der beiderseits vom Arm (10) angeordnete Stützen besitzt.

7. Einrichtung gemäß Anspruch 6, dadurch gekennzeichnet, daß die erwähnte Trägervorrichtung (9) auch eine drehbare Fußplatte (21) hat, auf welcher der spitzbogenförmige Galgen (29) aufgebaut ist.

**8.** Einrichtung gemäß Anspruch 7, dadurch gekennzeichnet, daß die Trägervorrichtung (9) eine Sockelplatte 18) besitzt, auf deren Oberseite sich die Fußplatte (21) befindet, und an deren Unterseite Befestigungsmittel angeordnet sind.

**9.** Einrichtung gemäß Anspruch 8, dadurch gekennzeichnet, daß die Trägervorrichtung (9) auch Mittel zum Schutz des Arms hat.

**10.** Einrichtung gemäß Anspruch 9, dadurch gekennzeichnet, daß die Mittel zum Schutz des Arms durch eine Glocke (25) gebildet werden, welche die Trägervorrichtung (9) und den mit dem Arm (10) ausgerüsteten Roboter überdekken kann.

**11.** Einrichtung gemäß Anspruch 4, dadurch gekennzeichnet, daß die Mittel zur Herstellung einer mechanischen Verbindung zwischen der Trägervorrichtung (9) und dem Querträger (4) durch einen Greifer (8) gebildet werden, der sich um eine vertikale Achse drehen kann, der mit einem am Querträger (4) befindlichen Wagen (6) verbunden ist und der mit der Glocke (25) versehen ist.

**12.** Einrichtung gemäß Anspruch 11, dadurch gekennzeichnet, daß der Greifer (8) mit einem Stabilisator versehen ist, welcher ein Kreiselrad (37) mit horizontaler Achse enthält sowie Mittel zum Drehen des Greifers (8) um eine im Verhältnis zum Stabilisator vertikal liegende Achse, damit der Greifer (8) entsprechend ausgerichtet werden kann.

**13.** Einrichtung gemäß Anspruch 12, dadurch gekennzeichnet, daß der Greifer außerdem trennbare Aufhängemittel an einen Wickler (16) trägt, welcher die Verbindungsmittel (12) tragen kann, die die Steuer- und Versorgungsmittel für das Werkzeug (11) des Roboterarms (10) verbinden.

**14.** Einrichtung gemäß eines beliebigen Anspruchs 4 bis 13, dadurch gekennzeichnet, daß der Trägervorrichtung (9) aus zwei Teilstücken besteht, von denen eines im Verhältnis zum Objekt befestigt werden und das andere entlang des ersten Teilstücks verfahren kann.

**15.** Einrichtung gemäß eines beliebigen Anspruchs 4 bis 14, dadurch gekennzeichnet, daß der Trägervorrichtung (9) in kleinen Schritten verfährt, während entsprechende Bewegungen des Arms (10) den Ausgleich schaffen.

**16.** Einrichtung gemäß Anspruch 15, dadurch gekennzeichnet, daß die Überwachungsstation Mittel zum Steuern und Speichern von Softwareprogrammen enthält, wobei Werkstatt und besagte Mittel in einem einzigen, in Höhe der Steuer- und Speichermittel liegenden Prozessor zusammengefaßt sind, und wobei der Roboterarm (10) und seine Trägervorrichtung (9) Kodierer/Dekodierer enthalten und wobei die erforderlichen elektrischen und mechanischen Mittel und ihre direkten Leistungssteuerungen mit den genannten Kodierern/Dekodierern verbunden sind.

FIG.1

FIG.2

FIG.3

FIG.9

FIG.10

FIG.4

FIG.5

FIG.6

FIG.7

FIG.8

FIG.11

FIG.12